# EUROPEAN PATENT APPLICATION

(11) **EP 4 414 057 A1**
(43) Date of publication of application: **14.08.2024**
(21) Application number: 23155479.1
(22) Date of filing: 08.02.2023
(51) Int. Cl.: B01D 63/08, B01D 65/00, B01D 65/08, H01M 8/04, H01M 8/04119, H01M 8/0273

(54) **STACK PLATE DEVICE AND HUMIDIFIER FOR FUEL CELL SYSTEM**

(71) Applicant: MANN+HUMMEL GmbH, 71636 Ludwigsburg (DE)
(72) Inventor: JAINEK, Herbert, 74074 Heilbronn (DE)
(74) Representative: Mann + Hummel Intellectual Property

(57) **Abstract**

The invention relates to a stack plate device (400) for a humidifier (1000), in particular for a fuel cell system, the stack plate device (400) including stack plates (100) stacked in a stacking direction (500), and end plates (436) enclosing both ends (430, 432) of the stack and being pressed together by mounting bolts (204). The stack plate device 400 further includes at least one gasket (440) arranged on outer sides of the stack plate device (400) and comprising at least two circumferential sealing lips (442) being arranged on a circumference of a front side (438) of the end plate (436) each, the gasket (440) further comprising at least four primary radial sealing lips (444) being arranged along the mounting bolt (204) each. The at least two circumferential sealing lips (442) and the at least four primary radial sealing lips (444) are connected as a three-dimensional frame.

The invention further relates to a humidifier (1000).

## Description

### Technical Field

The invention relates to a stack plate device for a humidifier, in particular for a fuel cell system, as well as a humidifier for a fuel cell system.

### Background Art

Humidifiers are used for example to humidify process gas for fuel cells which are operated with molecular hydrogen and/or oxygen or air for electricity generation. The process gases supplied to the fuel cell are for this reason usually set to a desired, stable humidity in a humidifier. A humidifier comprises flow plates which are usually provided with channel structures, wherein the channels adjoin a water transfer medium, typically in the form of a semipermeable layer such as a water-transfer membrane. An assembly usually provides a plurality of flow plates, between which there are arranged water transfer membranes.

For example, on one side of a semipermeable layer a moist gas, e.g., an exhaust gas from the fuel cell, is guided through the channels of an adjacent flow plate, and on the opposite side of the semipermeable layer a dry gas, e.g. fresh air, is passed through channels of a second flow plate. In this case, the moist gas on one side of the semipermeable layer gives off moisture to the semipermeable layer, whereas on the opposite side the semipermeable layer gives off moisture to the dry gas.

WO 2018/055130 A1 discloses a flow plate for a humidifier, and to such a humidifier having a plurality of flow plates and water exchange membranes. Humidifiers of this kind are used in electrochemical systems, among other things. The flow plate has a flow field with a plurality of free-standing support elements, wherein the support elements extend, at least in sections, perpendicular to the flat surface plane of the flow plate. Gas to be humidified or gas giving off moisture flows on the flow field. In the humidifier, the flow plates are arranged in a stack, wherein a membrane composite having at least one water exchange membrane is arranged between each pair of adjacent flow plates in the stack.

### Summary

It is an object of the invention to provide an improved stack plate device for a humidifier, in particular for a fuel cell system.

Another object is to provide an improved humidifier with such a stack plate device.

According to an aspect of the invention, the object is achieved by a stack plate device for a humidifier, in particular for a fuel cell system, having a stack of a plurality of stack plates, the stack plates being stacked one atop of each other in a stacking direction, and being enclosed on both ends of the stack by end plates, the end plates pressed together by mounting bolts, wherein at least first and second groups of flow channels are formed in the stack plate device for fluid flow transversely to one another on opposing sides of the stack plates and being separated by semipermeable layers, in particular moisture-permeable layers, wherein three of the alternatingly successive stack plates each form two of the flow channels, which are formed such that flow can pass through them transversely to one another on opposing sides of the stack plates, wherein at least one gasket is arranged on outer sides of the stack plate device, comprising at least two circumferential sealing lips being arranged on a circumference of a front side of an end plate each, and further comprising at least four primary radial sealing lips being arranged along a mounting bolt each, the at least two circumferential sealing lips and at least four primary radial sealing lips being connected as a three-dimensional frame enclosing the stack of stack plates and the end plates.

According to a further aspect of the invention, the further object is achieved by a humidifier for a fuel cell system, comprising a housing which has at least one inlet for a first fluid, in particular an exhaust gas of the fuel cell system, an inlet for a second fluid, in particular a supply air of the fuel cell system, an outlet for the first fluid and an outlet for the second fluid, further comprising a stack plate device, having a plurality of stack plates, the stack plates being stacked one atop of each other in a stacking direction, and being enclosed on both ends of the stacking direction by end plates, the end plates pressed together by mounting bolts, wherein at least first and second groups of flow channels are formed in the stack plate device for fluid flow transversely to one another on sides of the stack plates and being separated by semipermeable layers, in particular moisture-permeable layers,
wherein three of the alternatingly successive stack plates each form two of the flow channels, which are formed such that flow can pass through them transversely to one another, wherein at least one gasket is arranged on outer sides of the stack plate device, comprising at least two circumferential sealing lips being arranged on a front side of an end plate each, and further comprising at least four primary radial sealing lips being arranged along a mounting bolt each, the at least two circumferential sealing lips and at least four primary radial sealing lips being connected as a three-dimensional frame enclosing the stack of stack plates and the end plates, wherein the first group of flow channels are arranged between the inlet and the outlet for the first fluid and the second group of flow channels are arranged between the inlet and the outlet for the second fluid.

Advantageous embodiments are described in the dependent claims, the description and the drawings.

According to an aspect of the invention, a stack plate device for a humidifier, in particular for a fuel cell system, is proposed, having a stack of a plurality of stack plates, the stack plates being stacked one atop of each other in a stacking direction, and being enclosed on both ends of the stack by end plates, the end plates pressed together by mounting bolts. At least first and second groups of flow channels are formed in the stack plate device for fluid flow transversely to one another on opposing sides of the stack plates and being separated by semipermeable layers, in particular moisture-permeable layers. Three of the alternatingly successive stack plates each form two of the flow channels, which are formed such that flow can pass through them transversely to one another on opposing sides of the stack plates. At least one gasket is arranged on outer sides of the stack plate device, comprising at least two circumferential sealing lips being arranged on a circumference of a front side of an end plate each, and further comprising at least four primary radial sealing lips being arranged along a mounting bolt each. The at least two circumferential sealing lips and at least four primary radial sealing lips are connected as a three-dimensional frame enclosing the stack of stack plates and the end plates.

The gasket is a hollow three dimensional body formed by the circumferential sealing lips and the primary radial sealing lips in the edges of the body. The gasket encloses the stack of stack plates in a frame-like manner.

Favorably, mounting bolts of the stack plate device may be made smooth so that a gasket finds a continuous groove base and not the many edges of the sheet metal layers of the stack plates. The mounting bolts are arranged in edges of the stack of stack plates. The circumferential sealing lips of the gasket enclose the mounting bolts and are in contact with a segment of each mounting bolt. In the interface region of each of the mounting bolts a three lip seal of the gasket is provided arranged in parallel to the mounting bolts. The middle lip of the three-lip seal extends in such a way that it penetrates into the end plates of the stack plate device in each case. This lip seals to the housing wall as well as to the cover of the humidifier. The four middle lips of the gasket are connected at the top and below to each other at the highest point in a frame-shaped one-piece connection. The gasket, e.g. realized as a rubber frame, represents the sealing points between the stack end plates and the housing or its cover.

Thus, the gasket as a three-dimensional elastomer cube edge seal advantageously represents a one-piece seal between the stack plate device and the housing.

Advantageously the stack device may be sealed against a housing of a humidifier by the proposed gasket without the need for gluing or foaming and curing. Also sealing materials which must be cured after joining may be avoided. Thus automatized manufacturing of the stack plate device is possible. The stack plate device may be a precursor of classical manufacturing processes. This results in a reliable solution for elastic joint sealing, if elastomers are chosen appropriately.

According to a favorable embodiment of the stack plate device, the at least one gasket may be formed in one piece. In particular, the primary radial sealing lips and the circumferential sealing lips may form corners of a cuboid. Advantageously, reliable sealing between the stack plate device and the housing of the humidifier may be achieved by the one-piece gasket. The assembly process of the humidifier may thus be facilitated by easy mounting of the cube shaped gasket.

According to a favorable embodiment of the stack plate device, the mounting bolts may be configured with a continuous, in particular flat, groove base for mounting the primary radial sealing lips. The groove base may advantageously be the only part of the stack plate device which is flat for reliable sealing between the stack plate device and the housing of the humidifier by the gasket.

According to a favorable embodiment of the stack plate device, the end plates may be configured with a receptacle for accommodating the primary radial sealing lip. The middle lip of the gasket is extended in such a way that it penetrates into the end plates of the stack plate device in each case for appropriate sealing.

According to a favorable embodiment of the stack plate device, at least one secondary radial sealing lip may be arranged alongside of at least one of the primary radial sealing lips. In particular, at least two secondary radial sealing lips may be arranged along opposing sides of the at least one of the primary radial sealing lips each. The two secondary radial sealing lips are radially sealingly engaged between the stack plate device and the housing. The secondary radial sealing lips may also improve the stability against torsion of the arrangement of the stack plate device.

According to a favorable embodiment of the stack plate device, the stack plate may comprise a peripheral frame which encloses a through-opening in the stack plate, the through-opening being covered by the semipermeable layer. Receptacles may be arranged in the frame for accommodating the mounting bolts. Thus the semipermeable layer, e.g. a membrane, is supported by the frame. An outer circumference of the semipermeable layer may be embedded in the frame. Opposing front ends of the frame define inflow and outflow regions, respectively, on a first side of the frame for a second fluid and opposing longitudinal ends of the frame define inflow and outflow regions, respectively, on a second side of the frame for a first fluid.

The stack plates can preferably be formed from plastic, for example PA6.6 (polyamide), PPA (polyphtalamide), PPS (polyphenylene sulfide), or TPX (polymethylpentene).

The semipermeable layer thus separates the exhaust gas flow channel from the supply air flow channel. The semipermeable layer can be designed, for example, as a PFSA (perfluorosulfonic acid) membrane. Such membranes are also commonly used as proton exchange membranes. The membrane is airtight but permeable to moisture.

According to a favorable embodiment of the stack plate device, nubs may be arranged in the frame near the receptacles for securing the end plates by fixing the mounting bolts to the end plates by screws. Advantageously a chamber for the fluid flow is provided enclosed by semipermeable layers of neighboring stack plates.

According to a favorable embodiment of the stack plate device, in an intended mounting configuration of the stack plate device a gap may be arranged between the mounting bolt and the end plate, the gap being sealed by a circular gasket. Thus, proper sealing between the stack plate device and the housing may be achieved.

According to a favorable embodiment of the stack plate device, at least two opposing longitudinal sides of the semipermeable layer may be sealed to the corresponding stack plate by overmolding. Silicone overmolding may advantageously seal the semipermeable layer and also may seal the gas flow channels to each other. The overmold itself forms a stable frame of the stack plate.

According to a favorable embodiment of the stack plate device, centering studs may be arranged in the overmolded portion opposing the mounting bolts for radial sealing. The centering studs may advantageously serve for a better radial sealing of the stack plate device.

According to a favorable embodiment of the stack plate device, successive stack plates may be connected to one another in a fluid-tight manner except for inflow or outflow regions between the stack plates. In particular, successive stack plates may be connected to one another at the frames of the stack plates, in particular are bonded to one another. By this way the flow channels may advantageously be sealed one against each other in the frame region in order to guarantee steady flow conditions for the exhaust gas and the supply air. Favorable humidity transfer through the semipermeable layer may be provided.

According to a favorable embodiment of the stack plate device, the stack plates may be stacked alternately one atop of each other in a stacking direction, with first sides of adjacent stack plates facing first sides and second sides of adjacent stack plates facing second sides. Three each of the alternately successive stack plates form a first and a second group of flow channels formed transversely to each other for flow of the first or second fluid therethrough. The first group of flow channels are arranged between the inlet and the outlet for the first fluid and the second group of flow channels are arranged between the inlet and the outlet for the second fluid.

According to a favorable embodiment of the stack plate device, at least one turbulence generating component may be arranged on a first side and/or a second side of the stack plates. The turbulence generating components may be arranged on the stack plate and may support the semipermeable layer and also regulate the fluid flow for optimized mass transfer through the semipermeable layer. Height, angle and spacing of struts of the turbulence generating component can vary if necessary. The turbulence generating component may be made from plastics, e.g. PPS, or from stainless steel, e.g., for a stable support. The grid-like support element can be attached to the frame of the stack plate in a shape adapted to the frame.

According to a further aspect of the invention, a humidifier for a fuel cell system may be proposed, comprising a housing which has at least one inlet for a first fluid, in particular an exhaust gas of the fuel cell system, an inlet for a second fluid, in particular a supply air of the fuel cell system, an outlet for the first fluid and an outlet for the second fluid. The humidifier further comprises a stack plate device, having a plurality of stack plates, the stack plates being stacked one atop of each other in a stacking direction, and being enclosed on both ends of the stacking direction by end plates, the end plates pressed together by mounting bolts. At least first and second groups of flow channels are formed in the stack plate device for fluid flow transversely to one another on sides of the stack plates and being separated by semipermeable layers, in particular moisture-permeable layers. Three of the alternatingly successive stack plates each form two of the flow channels, which are formed such that flow can pass through them transversely to one another. The first group of flow channels is arranged between the inlet and the outlet for the first fluid and the second group of flow channels is arranged between the inlet and the outlet for the second fluid. At least one gasket is arranged on outer sides of the stack plate device, comprising at least two circumferential sealing lips being arranged on a front side of an end plate each, and further comprising at least four primary radial sealing lips being arranged along a mounting bolt each. The at least two circumferential sealing lips and at least four primary radial sealing lips are connected as a three-dimensional frame enclosing the stack of stack plates and the end plates.

The humidifier represents a special embodiment of a flat membrane humidifier. A first, moist or water-rich fluid, for example exhaust gas from fuel cells, flows in one group of flow channels, while a second, dry fluid, for example supply air for the fuel cells, flows in another group of flow channels. The second dry fluid can be moistened by the first fluid via the semipermeable membranes.

Advantageously the stack device may be sealed against the housing of the humidifier by a gasket being formed as a three-dimensional elastomer cube edge seal represented by a one-piece.

The housing of the humidifier can be made of metal, for example aluminum. Alternatively, it is also possible that the housing is made of plastics, for example PPS, PPA (polyphtalamide), PA (polyamide).

The housing can be made in several parts with a removable cover. In this way, the stack plate device can be removed from the housing for maintenance purposes and/or be replaced.

### Brief Description of the Drawings

The present invention together with the above-mentioned and other objects and advantages may best be understood from the following detailed description of the embodiments, but not restricted to the embodiments, wherein is shown in:
Figure 1 is a stack plate device for a humidifier, in particular a humidifier for a fuel cell system, according to an embodiment of the invention, in an isometric view;
Figure 2 is a gasket of the stack plate device according to Figure 1 as a three-dimensional frame according to an embodiment of the invention;
Figure 3 is the stack plate device according to Figure 1 from a first end;
Figure 4 is a cut view of the stack plate device along the line A-A according to Figure 3;
Figure 5 is a top view of the stack plate device according to Figure 1;
Figure 6 is a cut view of the stack plate device along the line B-B according to Figure 5;
Figure 7 is a magnified cut view of one of the corners of the stack plate device according to Figure 6;
Figure 8 is a cut view of a stack plate device according to a further embodiment of the invention;
Figure 9 is a magnified view of a detail X according to Figure 8;
Figure 10 is an explosion view of a humidifier for a fuel cell system according to an embodiment of the invention; and
Figure 11 is the humidifier according to Figure 10 in an isometric view.

### Detailed Description

In the drawings, like elements are referred to with equal reference numerals. The drawings are merely schematic representations, not intended to portray specific parameters of the invention. Moreover, the drawings are intended to depict only typical embodiments of the invention and therefore should not be considered as limiting the scope of the invention.

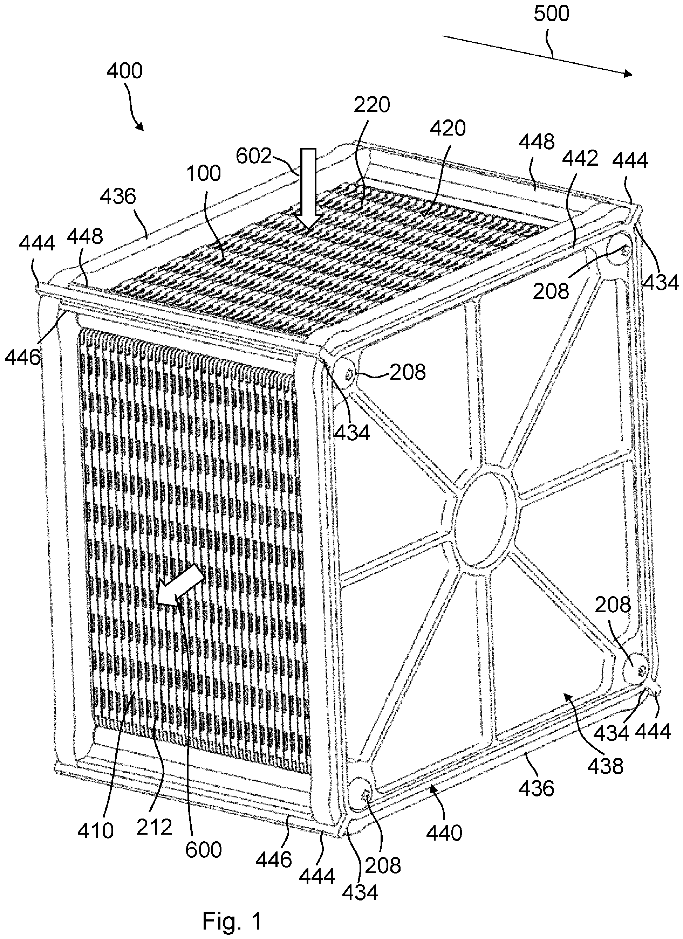

Figure 1 depicts a stack plate device 400 for a humidifier 1000, in particular a humidifier 1000 for a fuel cell system, according to an embodiment of the invention, in an isometric view.

The stack plate device 400 has a stack of a plurality of stack plates 100. The stack plates 100 are stacked one atop of each other in a stacking direction 500, and are enclosed on both ends 430, 432 of the stack by end plates 436. The end plates 436 are pressed together by mounting bolts 204 being screwed to the end plates 436 by screws 208.

At least first and second groups of flow channels 410, 420 are formed in the stack plate device 400 for fluid flow transversely to one another on opposing sides 125, 126 of the stack plates 100. The first and second groups of flow channels 410, 420 are separated by semipermeable layers 110, in particular moisture-permeable layers 110.

Three of the alternatingly successive stack plates 100 each form two of the flow channels 410, 420, which are formed such that flow can pass through them transversely to one another on opposing sides 125, 126 of the stack plates 100.

In Figure 1 an outgoing first fluid flow 600 out of the flow channels 410 is shown and an ingoing second fluid flow 602 into the flow channels 420.

At least one gasket 440 is arranged on outer sides of the stack plate device 400, comprising at least two circumferential sealing lips 442 being arranged on a circumference of a front side 438 of an end plate 436 each, and further comprising at least four primary radial sealing lips 444 being arranged along a mounting bolt 204 each. The at least two circumferential sealing lips 442 and at least four primary radial sealing lips 444 are connected as a three-dimensional frame enclosing the stack of stack plates 100 and the end plates 436.

The two circumferential sealing lips 442 seal the stack plate device 400 against the housing of a humidifier 1000 in an axial direction, whereas the at least four primary radial sealing lips 444 serve for radial sealing against the housing. For this purpose, the end plates 436 are configured with a receptacle 434 for accommodating the primary radial sealing lip 444.

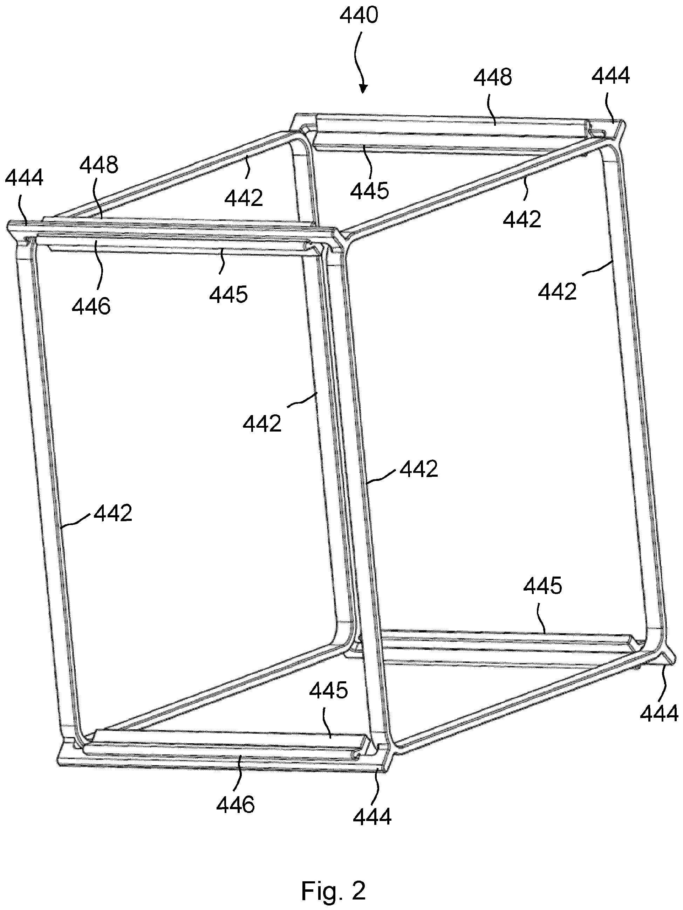

In Figure 2 the gasket 440 of the stack plate device 400 according to Figure 1 is depicted as a three-dimensional frame. The gasket 440 is formed in one piece for easy assembly of the stack plate device 400 and proper sealing. In particular, the primary radial sealing lips 444 and the circumferential sealing lips 442 form corners of a cuboid.

At least one secondary radial sealing lip 446, 448 may be arranged alongside of at least one of the primary radial sealing lips 444. In particular, as is realized with the embodiment shown, at least two secondary radial sealing lips 446, 448 are arranged along opposing sides of the at least one of the primary radial sealing lips 444 each.

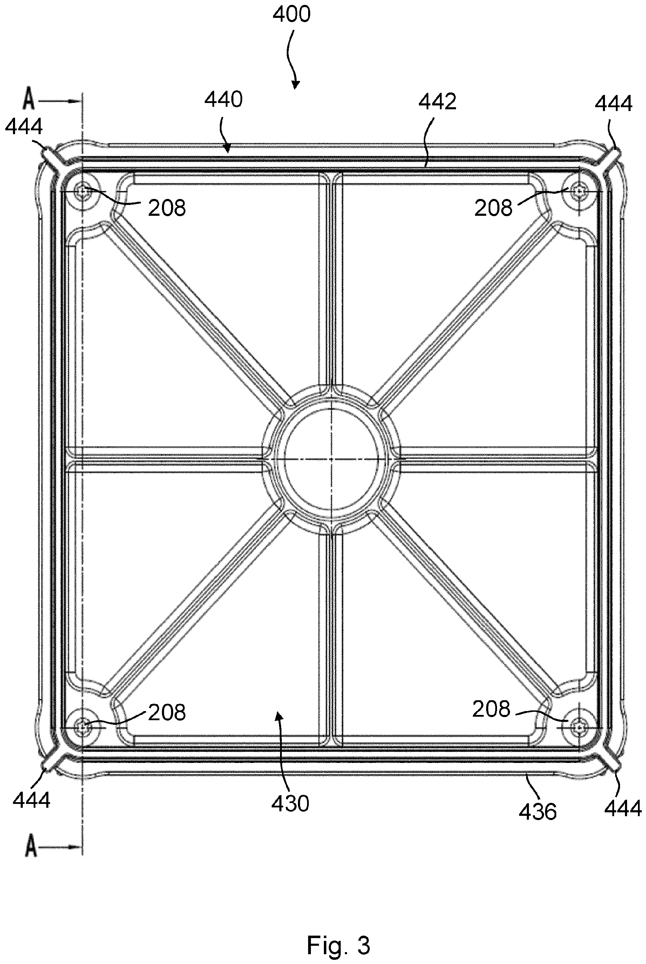

Figure 3 depicts the stack plate device 400 according to Figure 1 from a first end 430. This presents a direct view onto one of the end plates 436. The circumferential sealing lip 442 as well as the primary radial sealing lip 444 of the gasket 440 are to be recognized. In each of the four corners screws 208 are arranged for fixing the mounting bolts 204.

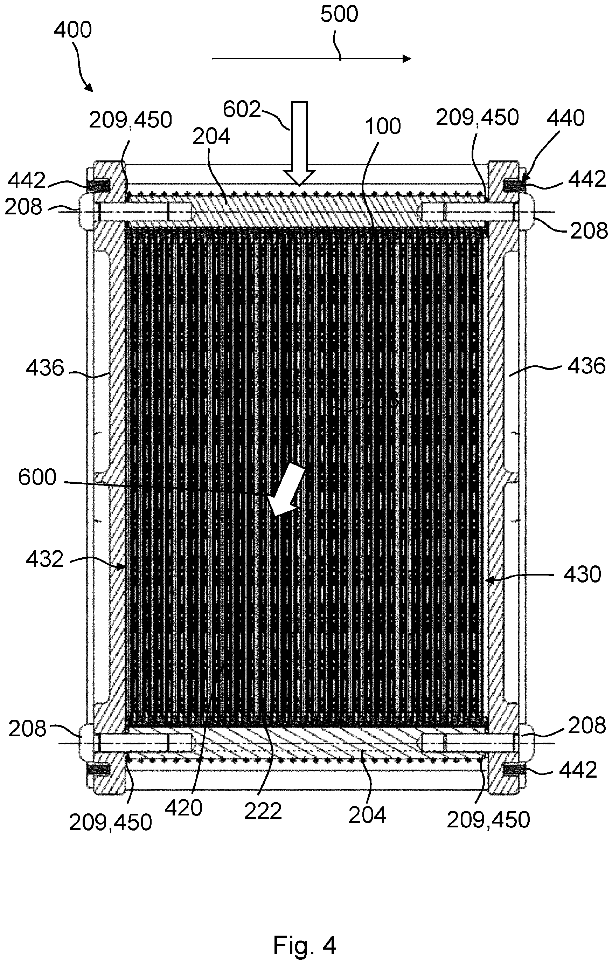

In Figure 4 a cut view of the stack plate device 400 along the line A-A according to Figure 3 is depicted. In this perspective, pressing of the end plates 436 by screwing the mounting bolts 204 may be recognized. The circumferential sealing lip 442 is also visible in the cut view. In the picture plane, the second fluid 602 is entering the stack plate device 400 from above and the first fluid 600 is outgoing from the picture plane.

In this intended mounting configuration of the stack plate device 400 a gap 209 is arranged between the mounting bolt 204 and the end plate 436. The gap 209 may be sealed by a circular gasket 450.

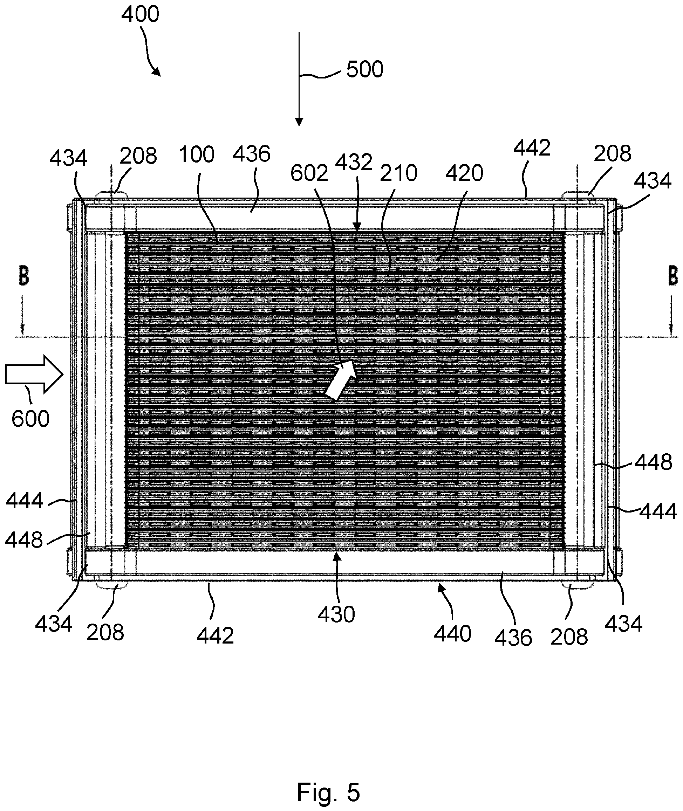

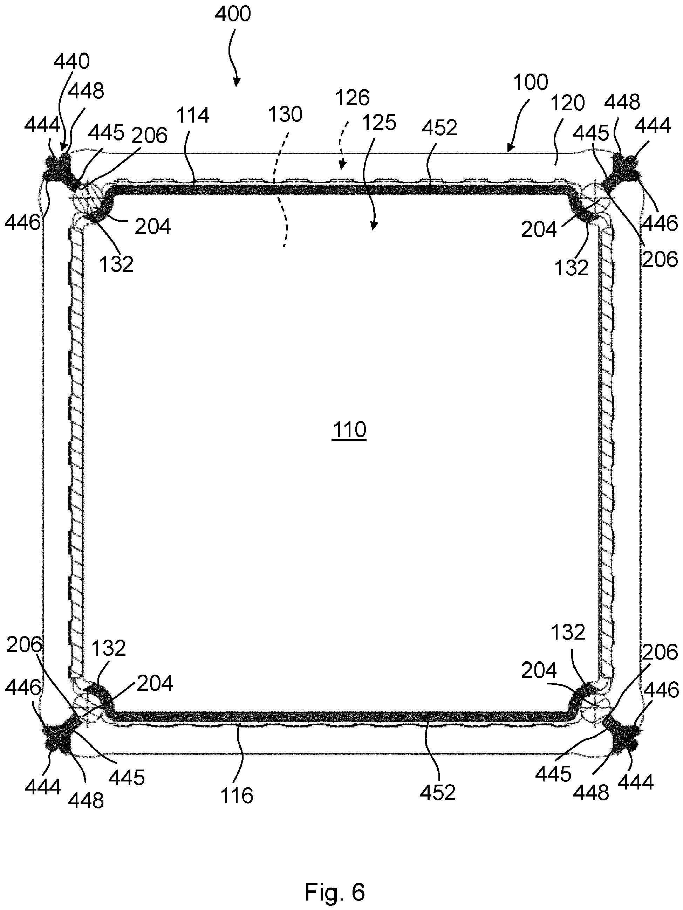

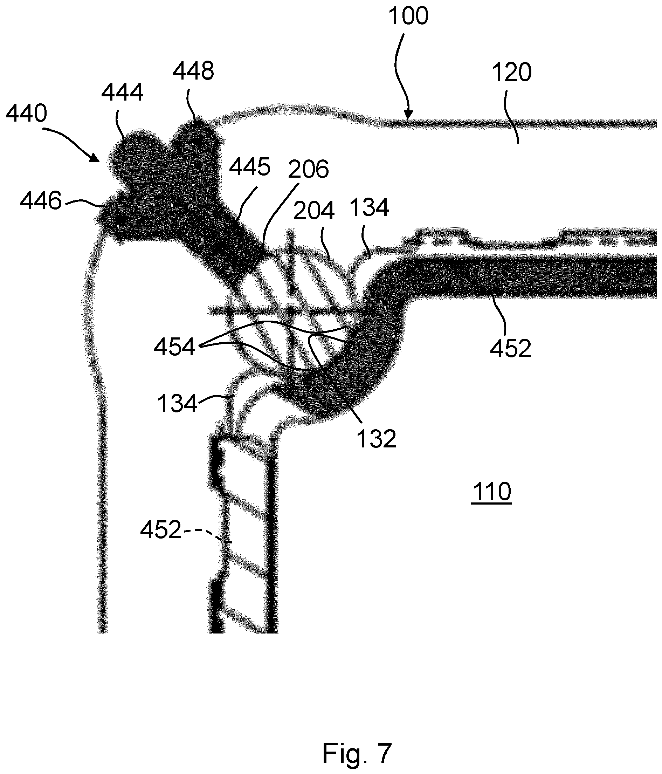

Figure 5 depicts a top view of the stack plate device 400 according to Figure 1, whereas in Figure 6 a cut view of the stack plate device 400 along the line B-B according to Figure 5 is shown. Figure 7 depicts a magnified cut view of one of the corners of the stack plate device 400.

In this cut view a single stack plate 100 is depicted. The stack plate 100 comprises a peripheral frame 120, which encloses a through-opening 130 in the stack plate 100. The through-opening 130 is covered by the semipermeable layer 110. Receptacles 132 are arranged in the frame 120 for accommodating the mounting bolts 204.

The mounting bolts 204 are configured with a continuous, in particular flat, groove base 206 for mounting the primary radial sealing lips 444, thus forming a reliable sealing surface for the sealing lips 444.

In the embodiment shown, at least two opposing longitudinal sides 114, 116 of the semipermeable layer 110 are sealed to the corresponding stack plate 100 by overmolding. The overmolded portion 452 is marked by a thick black stripe in Figures 6 and 7.The layer 110 is overmolded with sealing material and then clamped between metal layers of the stack plates 100 by the screws 208 after pressing the whole stack.

The stack plates 100 in the stack plate device 400 are stacked alternately one atop of each other in a stacking direction 500, with first sides 126 of adjacent stack plates 100 facing first sides 126 and second sides 125 of adjacent stack plates 100 facing second sides 125.

Successive stack plates 100 are connected to one another in a fluid-tight manner except for inflow or outflow regions 210, 212; 220, 222 between the stack plates 100. In particular, successive stack plates 100 may be connected to one another at the frames 120 of the stack plates 100. In particular, the successive stack plates 100 may be bonded to one another.

As is to be seen in Figure 7, nubs 134 are arranged in the frame 120 near the receptacles 132 for securing the end plates 436 by fixing the mounting bolts 204 to the end plates 436 by screws 208. The nubs 134 are part of the membrane sealing and have the function to seal after compressing the stack against the mounting bolts 204, avoiding leakage between process gases (wet or dry).

Further, centering studs 454 are arranged in the overmolded portion 452 opposing the mounting bolts 204 for radial sealing.

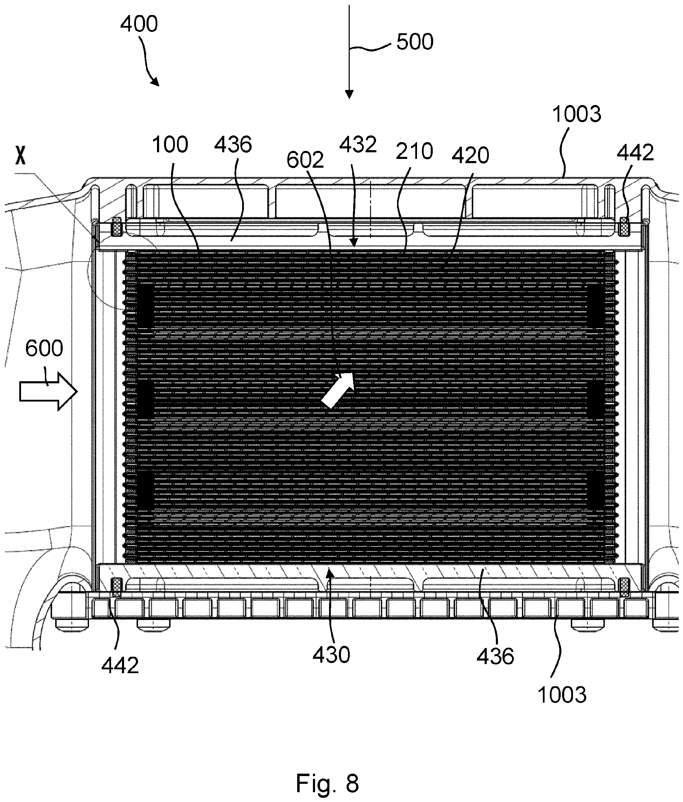

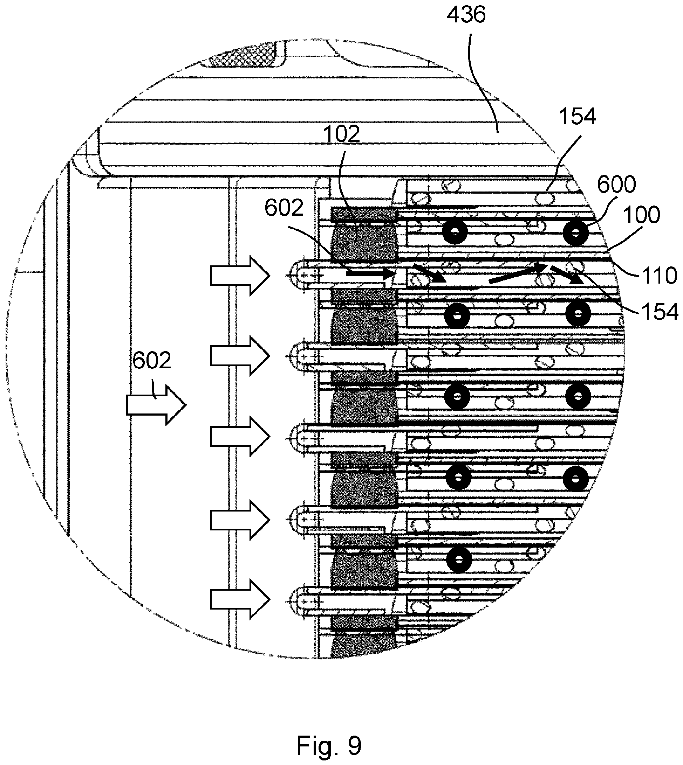

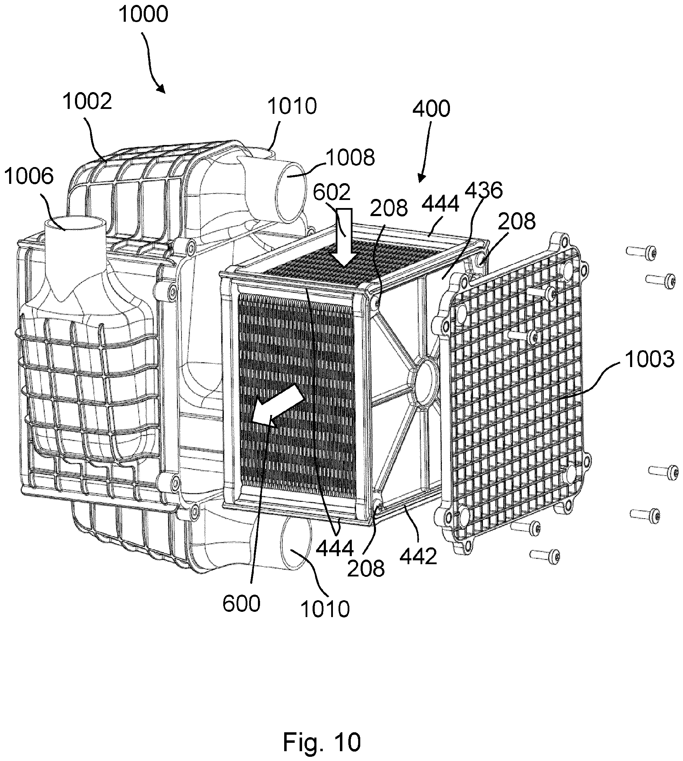

Figure 8 depicts a cut view of a stack plate device 400 according to a further embodiment of the invention. Figure 9 shows a magnified view of a detail X according to Figure 10.

In this embodiment, the stack plate device 400 is provided with a number of turbulence generating components 154 being arranged on a first side 126 and/or a second side 125 of the stack plates 100, which may especially be seen from the detailed view in Figure 9.

The turbulence generating components 154 may be provided as grid-like support elements, stabilizing also the semipermeable membranes 110 against the flow pressure from the first and/or second fluid 600, 602. The turbulence generating components 154 are to be seen in the cut view as open circles.

The first fluid 600 entering the stack plate device 400 through the picture plane in Figure 9 is marked by open circles. The second fluid 602 entering the stack plate device 400 from the left is marked by arrows.

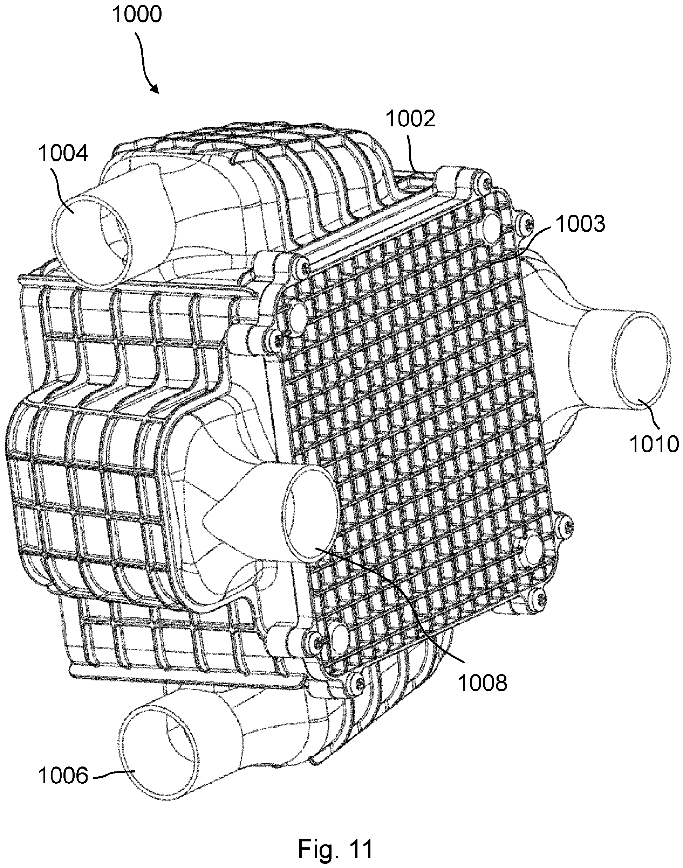

Figure 10 depicts an explosion view of a humidifier 1000 for a fuel cell system according to an embodiment of the invention, whereas in Figure 11 the humidifier 1000 is shown in an isometric view.

The humidifier 1000 comprises a housing 1002 which has at least one inlet 1004 (not to be seen in Figure 10) for a first fluid 600, in particular an exhaust gas of the fuel cell system, an inlet 1008 for a second fluid 602, in particular a supply air of the fuel cell system, an outlet 1006 for the first fluid 600 and an outlet 1010 for the second fluid 602.

Further the humidifier 1000 comprises a stack plate device 400, having a plurality of stack plates 100. The stack plates 100 are stacked one atop of each other in a stacking direction 500, and are enclosed on both ends 430, 432 of the stacking direction 500 by end plates 436. The end plates 436 are pressed together by mounting bolts 204.

First and second groups of flow channels 410, 420 are formed in the stack plate device 400 for fluid flow transversely to one another on sides 125, 126 of the stack plates 100 and being separated by semipermeable layers 110, in particular moisture-permeable layers 110. Hereby three of the alternatingly successive stack plates 100 each form two of the flow channels 410, 420, which are formed such that flow can pass through them transversely to one another.

The first group of flow channels 410 are arranged between the inlet 1004 and the outlet 1006 for the first fluid 600 and the second group of flow channels 420 are arranged between the inlet 1008 and the outlet 1010 for the second fluid 602.

When the stack plate device 400 is mounted in the housing 1002 of the humidifier 1000 depicted in Figure 10 the second fluid 602 enters the stack plate device from the top, whereas the first fluid 600 enters from behind the stack plate device 400 and leaves the stack plate device 400 on the front side.

A gasket 440 is arranged on outer sides of the stack plate device 400, comprising at least two circumferential sealing lips 442 being arranged on a front side 438 of an end plate 436 each. Further the gasket 440 comprises four primary radial sealing lips 444 being arranged along a mounting bolt 204 each. The two circumferential sealing lips 442 and the four primary radial sealing lips 444 are connected as a three-dimensional frame enclosing the stack of stack plates 100 and the end plates 436.

### Reference Numbers

100 stack plate
110 semipermeable layer
114 longitudinal side
116 longitudinal side
120 frame
125 second side, bottom side
126 first side, top side
130 through-opening
132 receptacle
134 nub
154 turbulence generating component
204 mounting bolt
206 groove base
208 screw
209 gap
210 inflow region
212 outflow region
220 inflow region
222 outflow region
400 stack plate device
410 flow channel
420 flow channel
430 end
432 end
434 receptacle
436 end plate
438 front side
440 gasket
442 circumferential sealing lip
444 primary radial sealing lip
445 inner section
446 secondary radial sealing lip
448 secondary radial sealing lip
450 circular gasket
452 overmolded portion
454 centering stud
500 stacking direction
600 first fluid (exhaust gas)
602 second fluid (supply air)
1000 humidifier
1002 housing
1003 housing cover
1004 inlet first fluid
1006 outlet first fluid
1008 inlet second fluid
1010 outlet second fluid

## Claims

1. A stack plate device (400) for a humidifier (1000), in particular for a fuel cell system, the stack plate device (400) comprising:
a stack of a plurality of stack plates (100) being stacked one atop of each other in a stacking direction (500);
a plurality of end plates (436) enclosing both ends (430, 432) of the stack and being pressed together by mounting bolts (204),
wherein at least first and second groups of flow channels (410, 420) are formed in the stack plate device (400) for fluid flow transversely to one another on opposing sides (125, 126) of the stack plates (100) and are separated by semipermeable layers (110), in particular moisture-permeable layers (110), and
wherein three of the alternatingly successive stack plates (100) each form two of the flow channels (410, 420), such that the fluid flow passes through the flow channels (410, 420) transversely to one another on the opposing sides (125, 126) of the stack plates (100); and
at least one gasket (440) arranged on outer sides of the stack plate device (400) and comprising at least two circumferential sealing lips (442) being arranged on a circumference of a front side (438) of the end plate (436) each, the gasket (440) further comprising at least four primary radial sealing lips (444) being arranged along the mounting bolt (204) each, and the at least two circumferential sealing lips (442) and the at least four primary radial sealing lips (444) being connected as a three-dimensional frame enclosing the stack of the stack plates (100) and the end plates (436).

2. The stack plate device according to claim 1, wherein the at least one gasket (440) is formed in one piece, in particular wherein the primary radial sealing lips (444) and the circumferential sealing lips (442) form corners of a cuboid.

3. The stack plate device according to claim 1 or 2, wherein the mounting bolts (204) are configured with a continuous, in particular flat, groove base (206) for mounting the primary radial sealing lips (444).

4. The stack plate device according to any one of the preceding claims, wherein the end plates (436) are configured with a receptacle (434) for accommodating the primary radial sealing lip (444).

5. The stack plate device according to any one of the preceding claims, wherein the gasket (440) further comprises at least one secondary radial sealing lip (446, 448) is arranged alongside of at least one of the primary radial sealing lips (444), in particular at least two secondary radial sealing lips (446, 448) are arranged along opposing sides of the at least one of the primary radial sealing lips (444) each.

6. The stack plate device according to any one of the preceding claims, wherein the stack plate (100) comprises a peripheral frame (120) enclosing a through-opening (130) in the stack plate (100), the through-opening (130) being covered by the semipermeable layer (110), and
wherein the peripheral frame (120) comprises receptacles (132) for accommodating the mounting bolts (204).

7. The stack plate device according to claim 6, wherein the peripheral frame (120) comprises nubs (134) near the receptacles (132) and for securing the end plates (436) by fixing the mounting bolts (204) to the end plates (436) by screws (208).

8. The stack plate device according to any one of the preceding claims, wherein in an intended mounting configuration of the stack plate device (400), a gap (209) is arranged between the mounting bolt (204) and the end plate (436), the gap (209) being sealed by a circular gasket (450).

9. The stack plate device according to any one of the preceding claims, wherein at least two opposing longitudinal sides (114, 116) of the semipermeable layer (110) are sealed to the corresponding stack plate (100) by overmolding.

10. The stack plate device according to claim 9, wherein centering studs (454) are arranged in an overmolded portion (452) opposing the mounting bolts (204) and are for radial sealing.

11. The stack plate device according to any one of the preceding claims, wherein successive stack plates (100) are connected to one another in a fluid-tight manner except for inflow or outflow regions (210, 212; 220, 222) between the stack plates (100), in particular wherein the successive stack plates (100) are connected to one another at the frames (120) of the stack plates (100), in particular are bonded to one another.

12. The stack plate device according to any one of the preceding claims, wherein the stack plates (100) are stacked alternately one atop of each other in a stacking direction (500), with first sides (126) of adjacent stack plates (100) facing first sides (126) and second sides (125) of adjacent stack plates (100) facing second sides (125).

13. The stack plate device according to any one of the preceding claims, further comprising at least one turbulence generating component (154) arranged on a first side (126) and/or a second side (125) of the stack plates (100).

14. A humidifier (1000) for a fuel cell system, the humidifier (1000) comprising:
a housing (1002) comprising at least one inlet (1004) for a first fluid (600), in particular an exhaust gas of the fuel cell system, an inlet (1008) for a second fluid (602), in particular a supply air of the fuel cell system, an outlet (1006) for the first fluid (600) and an outlet (1010) for the second fluid (602);
a stack plate device (400) according to any one of the preceding claims, the stack plate device (400) comprising a plurality of stack plates (100) being stacked one atop of each other in a stacking direction (500), and a plurality of end plates (436) enclosing both ends (430, 432) of the stack and being pressed together by mounting bolts (204),
wherein at least first and second groups of flow channels (410, 420) are formed in the stack plate device (400) for fluid flow transversely to one another on opposing sides (125, 126) of the stack plates (100) and are separated by semipermeable layers (110), in particular moisture-permeable layers (110),
wherein three of the alternatingly successive stack plates (100) each form two of the flow channels (410, 420), such that the fluid flow passes through the flow channels (410, 420) transversely to one another on the opposing sides (125, 126) of the stack plates (100), and
wherein the first group of flow channels (410) is arranged between the inlet (1004) and the outlet (1006) for the first fluid (600), and the second group of flow channels (420) is arranged between the inlet (1008) and the outlet (1010) for the second fluid (602); and
at least one gasket (440) arranged on outer sides of the stack plate device (400), and comprising at least two circumferential sealing lips (442) being arranged on a front side (438) of the end plate (436) each, the gasket (440) further comprising at least four primary radial sealing lips (444) being arranged along the mounting bolt (204) each, and the at least two circumferential sealing lips (442) and the at least four primary radial sealing lips (444) being connected as a three-dimensional frame enclosing the stack of stack plates (100) and the end plates (436).
